# EUROPÄISCHE PATENTANMELDUNG

(11) **EP 4 421 060 A1**
(43) Veröffentlichungstag der Anmeldung: **28.08.2024**
(21) Anmeldenummer: 24156757.7
(22) Anmeldetag: 09.02.2024
(51) Int. Cl.: C05G 3/00, C05G 3/60, C05G 3/80

(54) **DÜNGEMITTEL ZUR VERBESSERUNG DER VERFÜGBARKEIT VON PFLANZENNÄHRSTOFFEN**

(30) Priorität: 24.02.2023 DE 102023104614
(71) Anmelder: Omnicult Farmconcept GmbH, 65549 Limburg (DE)
(72) Erfinder: Fischer, Marc, 65597 Hünfelden (DE); Schmidt, Hartmut Manfred, 44892 Bochum (DE)
(74) Vertreter: WSL Patentanwälte Partnerschaft mbB

(57) **Zusammenfassung**

Zur Verbesserung der Pflanzenverfügbarkeit von in einem Pflanzensubstrat chemisch gebundenen Pflanzennährstoffen, wie z.B. Phosphat, wird erfindungsgemäß ein Düngemittelsystem vorgeschlagen, das eine Komponente A zum Absenken des pH-Wertes im Pflanzensubstrat und eine Komponente B zum chemischen Binden von zweiwertigen Kationen und optional eine Komponente C mit Repellent-Effekt gegenüber Schadorganismen enthält.

## Beschreibung

Die vorliegende Erfindung betrifft ein Düngemittelsystem sowie dessen Verwendung zur Verbesserung der Pflanzenverfügbarkeit von in einem Pflanzensubstrat chemisch gebundenen Pflanzennährstoffen. Darüber hinaus umfasst die vorliegende Erfindung auch ein Verfahren, mit dem das erfindungsgemäße Düngemittelsystem erhalten wird.

Auf landwirtschaftliche Flächen wird in großen Mengen Phosphor ausgebracht, da Phosphor einen für Pflanzen essenziellen Pflanzennährstoff darstellt. Phosphor ist unverzichtbarer Baustein verschiedener Zellbestandteile, wie z.B. den Zellmembranen, dem Erbgut DNA und dem Energieträger ATP. Eine optimale Phosphorversorgung hebt den Proteingehalt in grünen Pflanzenteilen an und beschleunigt den Reifeprozess. Phosphormangel verursacht einen trägen Wachstumsstart im Frühjahr und kann zu deutlichen Ertragseinbußen führen.

Klassische Phosphorlieferanten sind tierische Dünger, wie z.B. Gülle oder Mist sowie mineralische Phosphordüngemittel gleichermaßen. Durch immer strenger werdende Gesetze in Bezug auf die Ausbringung von Phosphatdüngemitteln wird es jedoch immer wichtiger für den Landwirt im Boden bereits vorhandenes Phosphat für die Pflanzenernährung nutzbar zu machen. Phosphor liegt im Boden allerdings überwiegend in organischer oder mineralischer Form gebunden vor und ist daher für Pflanzen nur bedingt verfügbar.

Die optimale Phosphatverfügbarkeit liegt typischerweise im Bereich von pH 4 bis pH 8,5 und insbesondere im Bereich von pH 6 bis 7,5. Laut DLG-Merkblatt 456 "Hinweise zur Kalkdüngung" aus Juli 2020 wurde in zahlreichen Feldversuchen nachgewiesen, dass durch eine regelmäßige bedarfsgerechte Kalkung die vorhandenen Phosphor-Reserven im Boden besser genutzt werden können, wenn durch die Kalkung der für die Phosphatverfügbarkeit optimale pH-Bereich erreicht wird.

Um zu schnelle pH-Veränderungen nicht zu überschreiten, muss die Kalkmenge pro Kalkung passend bemessen sein. Insbesondere bei Böden mit niedrigem Tongehalt muss darauf geachtet werden, dass die Kalkgaben nicht zu umfangreich ausfallen, da solche Böden ein geringes Pufferungsvermögen aufweisen. Da der Gehalt an basisch wirksamen Bestandteilen zwischen den verfügbaren Kalkprodukten stark variieren kann, bedarf die Auswahl der richtigen Kalksorte und die Bestimmung der geeigneten Kalkmenge in Abhängigkeit von den besonderen Eigenschaften des Pflanzensubstrates und den speziellen Bedürfnissen der Ackerfrucht einer sorgfältigen Analyse, mit dem Risiko einer Unter- bzw. Überdosierung. Beim Einsatz von Brandkalk besteht darüber hinaus die Gefahr von Ätzschäden an den Pflanzen.

Es besteht daher ein Bedarf nach einer neuen Lösung für die Verbesserung der Pflanzenverfügbarkeit von in einem Pflanzensubstrat chemisch gebundenen Pflanzennährstoffen, wie z.B. Phosphat.

Um ein solche bessere Lösung bereitzustellen, wird erfindungsgemäß ein Düngemittelsystem zur Verbesserung der Pflanzenverfügbarkeit von in einem Pflanzensubstrat chemisch gebundenen Pflanzennährstoffen vorgeschlagen, wobei das Düngemittelsystem
▪ eine Komponente A zum Absenken des pH-Wertes im Pflanzensubstrat und
▪ eine Komponente B zum chemischen Binden von zweiwertigen Kationen und optional
▪ eine Komponente C mit Repellent-Effekt gegenüber Schadorganismen
enthält.

Die Komponente A bewirkt beim Ausbringen des erfindungsgemäßen Düngemittelsystems eine Absenkung des pH-Wertes im Pflanzensubstrat. Auf diese Weise kann der pH-Wert von neutralen bis alkalischen Böden in den für die Phosphatverfügbarkeit optimalen Bereich von pH 4 bis pH 8,5 oder gar in den besonders geeigneten Bereich von pH 6 bis 7,5 verschoben werden, wodurch eine Mobilisierung eines signifikanten Anteils des im Pflanzensubstrat chemisch gebundenen Phosphats erzielt wird.

Die erfindungsgemäße Kombination der Komponenten A und B kann unabhängig vom Ausgangs-pH-Wert des Pflanzensubstrat zu einer besseren Verfügbarkeit der gebundenen Pflanzennährstoffe führen. Beispielsweise kann auch in den Fällen, in denen der pH-Wert des Pflanzensubstrats bereits in dem für die Phosphatverfügbarkeit optimalen pH-Bereich liegt, eine weitere Verbesserung der Pflanzenverfügbarkeit der Nährstoffe im Substrat erreicht werden, z.B. indem der pH-Wert hin zu einem unter den gegebenen Umständen besonders bevorzugten Bereich verschoben wird.

Gerade auf Böden, die sehr viel Calcium und/oder Magnesium enthalten, liegt Phosphat, unabhängig davon, ob es im Pflanzensubstrat bereits vorhanden ist oder über einen Phosphatdünger auf die Fläche gebracht wurde, zu einem großen Teil chemisch gebunden in Form von Calcium- und/oder Magnesiumphosphat vor und ist somit nicht pflanzenverfügbar sondern festgelegt.

Erfindungsgemäß enthält das vorgeschlagene Düngemittelsystem daher zusätzlich noch eine Komponente B zum chemischen Binden von zweiwertigen Kationen, wie z.B. Calcium- und Magnesiumionen. Die Komponente B dient somit quasi als Kationenfänger, der das durch die Komponente A mittels Absenkung des pH-Wertes im Pflanzensubstrat freigesetzte Phosphat pflanzenverfügbar hält, indem dessen chemische Reaktion mit im Pflanzensubstrat vorhandenen zweiwertigen Kationen verhindert wird.

Je nachdem bei welcher Anwendung das erfindungsgemäße Düngemittelsystem zum Einsatz kommt, kann es zusätzlich zu der gewünschten Verbesserung der Phosphatverfügbarkeit gewünscht sein, dass mit dem Ausbringen des erfindungsgemäßen Düngemittelsystems gleichzeitig auch ein Schutz des Saatgutes bzw. der daraus hervorgehenden Pflanzen gegenüber Schädlingen gewährleistet wird. Gemäß einer besonderen Ausgestaltung der vorliegenden Erfindung enthält das erfindungsgemäße Düngemittelsystem daher optional zusätzlich einen Bestandteil mit Repellent-Effekt gegenüber pflanzenschädigenden Organismen.

Der Begriff "Düngemittelsystem" umfasst im Sinne der vorliegenden Erfindung ein Stoffgemisch oder einen Komponentensatz bestehend aus zumindest jeweils einer Substanz, die zum Absenken des pH-Wertes im Pflanzensubstrat geeignet ist (Komponente A) und einer Substanz, die zweiwertige Kationen im Pflanzensubstrat chemisch binden kann (Komponente B). Optional kann das erfindungsgemäße Düngemittelsystem darüber hinaus noch wenigstens eine Substanz mit Repellent-Effekt gegenüber Schadorganismen enthalten (Komponente C).

Von der vorliegenden Erfindung umfasst sind neben Gemischen aus den vorgenannten Komponenten A, B und optional C auch Komponentensätze, die die Komponenten A, B und optional C in separaten Gebinden enthalten, deren Inhalt dann entweder separat auf die zu behandelnde Fläche ausgebracht wird oder zuvor teilweise oder vollständig miteinander gemischt wird. Umfasst von der vorliegenden Erfindung sind somit auch Kombinationen aus Gemisch und Komponentensatz, wie z.B. die Komponenten A und B im Gemisch mit der optionalen Komponente C separat, die Komponenten A und C im Gemisch mit der Komponente B separat und die Komponenten B und C im Gemisch mit der Komponente A separat.

Der Begriff "Pflanzensubstrat" bezeichnet im Zusammenhang mit der vorliegenden Erfindung jedes Substrat, auf dem eine Pflanze, vorzugsweise eine Nutzpflanze, besonders bevorzugt eine Ackerpflanze, wachsen kann. Beispielsweise kann das Pflanzensubstrat ausgewählt sein unter Ackerboden, Pflanzenerde und Kompost. Ebenfalls umfasst sind künstliche Pflanzensubstrate, wie z.B. Steinwolle, Glaswolle und Agar. Bei einer speziellen Ausführungsform kann das Pflanzensubstrat auch eine Nährlösung sein.

Der Begriff "Pflanzennährstoffe" bezeichnet im Zusammenhang mit der vorliegenden Erfindung alle Art von für das Pflanzenwachstum erforderlichen Makro- und Mikronährstoffen. Beispiele für durch das erfindungsgemäße Düngemittelsystem besser verfügbarer Pflanzennährstoffe sind Stickstoff, Phosphor, Silizium und Kalium.

Der Begriff "im Pflanzensubstrat chemisch gebundener Pflanzennährstoff" bezeichnet im Zusammenhang mit der vorliegenden Erfindung insbesondere organisch oder mineralisch gebundene Pflanzennährstoffe. Insbesondere umfasst der Begriff auch zweiwertige Kationen, wie zum Beispiel Calcium, Magnesium oder Eisen gebundene Pflanzennährstoffe. Von der Definition umfasst sind aber auch in elementarer Form oder als Oxid und damit nicht pflanzenverfügbar vorliegende Pflanzennährstoffe.

Der Begriff "Verbesserung der Pflanzenverfügbarkeit" meint im Zusammenhang mit der vorliegenden Erfindung die Steigerung der Freisetzung und/oder Aufnahme von insbesondere chemisch oder organisch gebundenen Pflanzennährstoffen. Vorzugsweise erfolgt durch den Einsatz des erfindungsgemäßen Düngemittelsystems eine Verschiebung des Gleichgewichts von chemisch gebundenen Pflanzennährstoffen zu freien Pflanzennährstoffen, also zu Pflanzennährstoffen, die in ungebundener, vorzugsweise wasserlöslicher Form, vorliegen.

Dies gilt auch für die von der Komponente B chemisch gebundenen zweiwertigen Kationen, da die erfindungsgemäße Kombination der Komponenten A und B im Pflanzensubstrat vorzugsweise Bedingungen schafft, bei denen die chemische Bindung der im Pflanzensubstrat vorliegenden zweiwertigen Kationen reversibel ist, sodass im Bedarfsfall durch die Komponente B chemisch gebundene zweiwertige Kationen wieder mobilisiert und pflanzenverfügbar gemacht werden können.

Die in dem erfindungsgemäßen Düngemittelsystem enthaltene Komponente A soll den pH-Wert in einem Pflanzensubstrat absenken, indem die Protonen-Konzentration in dem mit dem Düngemittelsystem behandelten Pflanzensubstrat im Vergleich zu unbehandeltem Pflanzensubstrat erhöht wird.

Der Effekt der Absenkung des pH-Wertes soll möglichst über einen längeren Zeitraum anhalten. Im Idealfall sollte die Absenkung des pH-Wertes am besten über die gesamte Wachstumsperiode der Pflanzen auf der zu behandelnden Fläche erreicht werden. Je nach Beschaffenheit des Pflanzensubstrats und der Wachstumsperiode der Pflanze kann es hierfür erforderlich sein, dass mehrere Gaben des erfindungsgemäßen Düngemittelsystems erfolgen müssen, die jeweils zu einer Absenkung des pH-Wertes im Pflanzensubstrat führen.

Um die pH-Wert-absenkende Wirkung der Komponente A über einen möglichst langen Zeitraum aufrechtzuerhalten (Depoteffekt), handelt es sich bei der Substanz, die für die Komponente A des erfindungsgemäßen Düngemittelsystems eingesetzt wird, vorzugsweise um einen chemischen Stoff, der nicht oder nur schlecht wasserlöslich ist oder um einen gut wasserlöslichen chemischen Stoff, der vorzugsweise in einer Formulierung für die verlangsamte Freisetzung vorliegt, beispielsweise indem er auf ein poröses Trägermaterial aufgezogen wird oder in Form von mit einem schlecht wasserlöslichen Coating überzogenen Partikeln vorliegt.

Gemäß den Bestimmungen des Europäischen Arzneibuches gilt bei einer Temperatur im Bereich von 15°C bis 25°C ein chemischer Stoff dann als nicht wasserlöslich bzw. praktisch unlöslich in Wasser, wenn sich weniger als 0,1 g des Stoffes pro 1 l Wasser in Lösung bringen lassen. Als schlecht wasserlöslich werden hier solche Stoffe verstanden, die gemäß den Bestimmungen des Europäischen Arzneibuches sehr schwer bis wenig löslich sind, was bedeutet, dass sich lediglich 0,1 bis max. 33 g/l in Lösung bringen lassen.

Die Menge an Komponente A, die nach dem erfindungsgemäßen Düngemittelsystem einzusetzen ist, um die oben beschriebene pH-absenkende Wirkung zu erreichen, kann stark variieren. Bezogen auf die Oberfläche des Pflanzensubstrats kann die Menge im Bereich von 1 g bis 1000 kg pro Hektar erfolgen.

Wenn das erfindungsgemäße Düngemittelsystem als Saatgutbeize eingesetzt wird, liegt die Menge vorzugsweise im Bereich von 1 g bis 1000 g pro Hektar. Wird das erfindungsgemäße Düngemittelsystem als Mikrogranulat wurzelnah appliziert, liegt die Menge vorzugsweise im Bereich von 10 g bis 10 kg pro Hektar. Bei einer flächigen Anwendung über die gesamte Oberfläche des Pflanzensubstrats liegt die Menge vorzugsweise im Bereich von 0,1 kg bis 1000 kg pro Hektar.

Die Menge ist u.a. auch abhängig vom Nährstoffgehalt des Pflanzensubstrats und vom Bedarf der auf dem Pflanzensubstrat wachsenden Pflanze. Bei einem Pflanzensubstrat mit durchschnittlichem Nährstoffgehalt und bei einem normalen Nährstoffbedarf der auf dem Pflanzensubstrat wachsenden Pflanze kann die Komponente A pro Anwendung bereits ab einer Menge von 1 g pro Hektar mit Erfolg eingesetzt werden. Weist das Pflanzensubstrat einen geringen Nährstoffgehalt auf oder hat die Pflanze einen überdurchschnittlichen Nährstoffbedarf, erfolgt vorzugsweise pro Anwendung der Einsatz von wenigstens 25 g pro Hektar. Bei geringem Nährstoffgehalt und gleichzeitig überdurchschnittlichem Nährstoffbedarf erfolgt vorzugsweise pro Anwendung der Einsatz von wenigstens 50 g pro Hektar. Ist der Nährstoffgehalt sehr gering und gleichzeitig der Nährstoffbedarf sehr groß erfolgt vorzugsweise pro Anwendung der Einsatz von wenigstens 100 g pro Hektar.

Die Menge an Komponente A in dem erfindungsgemäßen Düngemittelsystem beträgt bei bestimmten Ausführungsformen wenigstens 100, wenigstens 250, wenigstens 500, wenigstens 1000 oder wenigstens 2500 g pro Hektar.

Die Menge an Komponente A, die nach dem erfindungsgemäßen Düngemittelsystem einzusetzen ist, um die oben beschriebene pH-absenkende Wirkung zu erreichen, ist auch davon abhängig, in welcher Form die Komponente A bereitgestellt wird.

Die Komponente A des erfindungsgemäßen Düngemittelsystems kann auf die unterschiedlichsten Weisen bereitgestellt werden. Bei bestimmten Ausführungsformen handelt es sich um chemische Stoffe, die zur Herabsenkung des pH-Wertes im Pflanzensubstrat geeignet sind, wie z.B. Säuren oder Säure freisetzende chemische Stoffe.

Beispielsweise enthält bei einer Ausführungsform die Komponente A eine Sulfatverbindung, wie z.B. Kaliumsulfat, Natriumsulfat, Calciumsulfat, Ammoniumsulfat oder Eisensulfat. Vorzugsweise liegt der pK_{S}-Wert der eingesetzten Säure bzw. der aus dem entsprechenden Salz hervorgegangenen Säure bei < 5, < 4 oder gar < 3.

Bei einer besonderen Ausführungsform der vorliegenden Erfindung wird als Komponente A elementarer Schwefel eingesetzt, der im Pflanzensubstrat, wie z.B. nach dem Ausbringen auf eine Ackerfläche, im Laufe der Zeit von den Bodenbakterien abgebaut und zu Sulfat- bzw. Hydrogensulfatverbindungen umgesetzt wird, die dann im Pflanzensubstrat ihre pH-absenkende Wirkung entfalten.

Bei einer alternativen Ausführungsform besteht die Komponente A aus Säure produzierenden Mikroorganismen, die nach dem Ausbringen im Pflanzensubstrat ihre Säure produzierenden Stoffwechselprozesse starten. Die von den Mikroorganismen erzeugten Säuren werden von diesen ins Pflanzensubstrat abgesondert und führen dort die pH-absenkende Wirkung herbei. Zu den säureproduzierenden Mikroorganismen, die für diese Zwecke eingesetzt werden können, zählen z.B. Thiobakterien.

Bei einer weiteren Alternative besteht die Komponente A aus Stoffen, welche die Pflanzenwurzeln dazu veranlassen, saure Wurzelexsudate zu erzeugen oder in größerem Maße zu erzeugen als sonst, wodurch die pH-absenkende Wirkung im Pflanzensubstrat bereitgestellt wird.

Bei noch einer weiteren Alternative besteht die Komponente A aus Mikroorganismen, die pH-absenkende Stoffe, wie z.B. organische Säuren, in das Pflanzensubstrat sezernieren. Ein Beispiel hierfür ist das Bodenbakterium *Bacillus megaterium* bzw. *Priestia megaterium.* Der Vorteil dieser Alternative besteht insbesondere darin, dass sich das Bakterium nach der Applikation im Pflanzensubstrat vermehren und dort über einen längeren Zeitraum persistieren kann, um so über einen längeren Zeitraum seine pH-absenkende Wirkung zu entfalten.

Erfindungsgemäß enthält das vorgeschlagene Düngemittelsystem eine Komponente B zum chemischen Binden von zweiwertigen Kationen, wie z.B. Calcium- und Magnesiumionen. Bei bestimmten Ausführungsformen ist die Komponente B ausgewählt unter einem Kationentauscher und/oder einem Chelatbildner. Beide sind dazu geeignet sind, im Pflanzensubstrat befindliche zweiwertige Kationen zu binden.

Der Begriff "chemisch binden" ist im Zusammenhang mit der vorliegenden Erfindung so zu verstehen, dass zwischen dem chemischen Stoff der Komponente B und zweiwertigen Kationen eine chemische Bindung ausgebildet wird, durch welche die entsprechend gebundenen Kationen jedenfalls vorübergehend nicht frei verfügbar sind. Diese Bindung ist jedoch reversibel, sodass im Bedarfsfall durch die Komponente B chemisch gebundene zweiwertige Kationen wieder mobilisiert und pflanzenverfügbar gemacht werden können.

Die chemischen Bindungstypen zwischen dem chemischen Stoff der Komponente B und den zweiwertigen Kationen können ausgewählt sein unter Wasserstoffbrückenbindungen, ionischen Bindungen, kovalenten Bindungen, koordinativen Bindungen und Kombinationen hiervon.

Bei manchen Ausführungsformen der Erfindung umfasst die Komponente B einen Kationentauscher, der aus der Gruppe ausgewählt ist, die aus Zeolith, Montmorillonit und Kombinationen hiervon besteht. Bei anderen Ausführungsformen ist die als Komponente B verwendbare Substanz ausgewählt unter Chelatbildnern, die mit zweiwertigen Kationen Chelatkomplexe bilden können. Beispielsweise können als Chelatbildner chelatbildende Aminosäuren, Carbonsäuren sowie deren Salze und Ester, mehrwertige Alkohole, mehrwertige Ether und Kombinationen hiervon eingesetzt werden.

Bei speziellen Ausführungsformen des erfindungsgemäßen Düngemittelsystems ist die Komponente B ein Chelatbildner, besonders bevorzugt eine chelatbildende organische Säure, deren Salze oder Kondensate oder Kombination hiervon. Vorzugsweise ist die organische Säure, deren Salze oder Kondensate oder Kombinationen hiervon, aus der Gruppe ausgewählt, die Gluconsäure, Ascorbinsäure, Isoascorbinsäure, Polyasparaginsäure (PASA), Acrylsäure, Oxalsäure, Weinsäure, Zitronensäure und Kombinationen hiervon umfasst.

Die hier als Chelatbildner genannten Säuren können unter Umständen auch eine pH-absenkende Wirkung haben, wobei unter den Begriff "Komponente zum chemischen Binden von zweiwertigen Kationen" vorzugsweise nur solche chemischen Stoffe mit Säurewirkung fallen sollen, deren pK_{S}-Wert > 3, > 4 oder > 5 ist. Entscheidend ist, dass die bei einer Ausführungsform der Erfindung verwendete chemische Substanz, die zum Absenken des pH-Wertes im Pflanzensubstrat als Komponente A zum Einsatz kommt, einen pK_{S}-Wert aufweist, der niedriger ist als der pK_{S}-Wert der bei dieser Ausführungsform als Komponente B eingesetzten chemischen Substanz. Vorzugsweise beträgt die Differenz zwischen den pK_{S}-Werten der Komponente A und der Komponente B wenigstens 0,1, 0,5, 1,0 wenigstens 2,0 oder gar wenigstens 3,0.

Im Gegensatz zu Komponente A ist bei bevorzugten Ausführungsformen der Erfindung die Komponente B gut bis sehr gut wasserlöslich mit Werten von über 33 bis 1.000 g/l oder sogar mehr.

Bei einer besonderen Ausführungsform der Erfindung wird als Komponente B eine spezielle Untersaat verwendet, deren Saatgut zum Anwachsen von Pflanzen führt, die sich dadurch auszeichnen, dass sie Substanzen bilden und ins Pflanzensubstrat abgeben, die dazu geeignet sind zweiwertige Kationen chemisch zu binden. Beispielsweise scheidet die weiße Lupine (*Lupinus albus*) über ihre Proteoidwurzeln Zitronensäure aus und kann so dazu beitragen, das zweiwertige Kationen im Pflanzensubstrat chemisch gebunden werden, wodurch verhindert wird, dass diese im Pflanzensubstrat enthaltenes Phosphat festlegen.

Die Menge an Komponente B, die nach dem erfindungsgemäßen Düngemittelsystem einzusetzen ist, um zweiwertige Kationen im Pflanzensubstrat chemisch zu binden, kann stark variieren. Bezogen auf die Oberfläche des Pflanzensubstrats kann die Menge im Bereich von 1 g bis 1000 kg pro Hektar erfolgen.

Wenn das erfindungsgemäße Düngemittelsystem als Saatgutbeize eingesetzt wird, liegt die Menge vorzugsweise im Bereich von 1 g bis 1000 g pro Hektar. Wird das erfindungsgemäße Düngemittelsystem als Mikrogranulat wurzelnah appliziert, liegt die Menge vorzugsweise im Bereich von 10 g bis 10 kg pro Hektar. Bei einer flächigen Anwendung über die gesamte Oberfläche des Pflanzensubstrats liegt die Menge vorzugsweise im Bereich von 0,1 kg bis 1000 kg pro Hektar.

Die Menge ist u.a. auch abhängig vom Nährstoffgehalt des Pflanzensubstrats und vom Bedarf der auf dem Pflanzensubstrat wachsenden Pflanze.

Bei einem Pflanzensubstrat mit geringem Gehalt an zweiwertigen Kationen und bei einem normalen Nährstoffbedarf der auf dem Pflanzensubstrat wachsenden Pflanze kann die Komponente B pro Anwendung bereits ab einer Menge von 1 g pro Hektar mit Erfolg eingesetzt werden. Weist das Pflanzensubstrat einen durchschnittlichen Gehalt an zweiwertigen Kationen auf oder hat die Pflanze einen überdurchschnittlichen Nährstoffbedarf, erfolgt vorzugsweise pro Anwendung der Einsatz von wenigstens 25 g pro Hektar. Bei einem hohen Gehalt an zweiwertigen Kationen und gleichzeitig überdurchschnittlichem Nährstoffbedarf erfolgt vorzugsweise pro Anwendung der Einsatz von wenigstens 50 g pro Hektar. Ist der Gehalt an zweiwertigen Kationen sehr hoch und/oder der Nährstoffbedarf sehr groß erfolgt vorzugsweise pro Anwendung der Einsatz von wenigstens 100 g pro Hektar.

Die Menge an Komponente B in dem erfindungsgemäßen Düngemittelsystem beträgt bei bestimmten Ausführungsformen wenigstens 100, wenigstens 250, wenigstens 500, wenigstens 1000 oder wenigstens 2500 g pro Hektar.

Erfindungsgemäß enthält das vorgeschlagene Düngemittelsystem optional eine Komponente C mit Repellent-Effekt gegenüber Schadorganismen, wobei unter dem Begriff Schadorganismen hier insbesondere alle potentiell pflanzenschädigenden Tiere, wie z.B. Insekten, Spinnentiere, Würmer und Wirbeltiere verstanden werden, wie beispielsweise Ackerbohnenkäfer, Spinnmilben, Drahtwürmer und Wildschweine. Bei bestimmten Ausführungsformen kann die Komponente C auch eine Schutzwirkung gegenüber phytopathogenen Bakterien und Pilzen haben, wie z.B. *Streptomyces scabiei* (Kartoffelschorf).

Die erfindungsgemäß optional eingesetzte Komponente C kann ausgewählt sein unter einem Farbstoff, einem Geruchsstoff, einem Geschmacksstoff, einem Knisterstoff oder Kombinationen hiervon. Beispielsweise wird blauem Farbstoff ein gegenüber den üblichen Schad-Wirbeltieren wirksamer Repellent-Effekt zugeschrieben. Vergrämende Geruchsstoffe sind z.B. Alkanole, 3-Methyl-butenthiol, Aluminiumammoniumsulfat-Dodecahydrat und Calciumcarbid, dass in Verbindung mit der Erdfeuchte vergrämende Geruchsstoffe freisetzt. Möglich vergrämende Scharfstoffe sind z.B. Capsaicin, Gingerol, Piperin und Senfölglycoside. Knisterstoffe haben einen akustischen Repellent-Effekt, wie z.B. Natriumhydrogencarbonat, Knallbrause und ähnliche Produkte mit CO₂-Einschlüssen.

Die vorgenannten Ausführungsformen mit oben beispielhaft aufgeführten Knisterstoffen haben - abgesehen von deren Repellent-Wirkung - auch den Vorteil, dass die Knisterstoffe den Zerfall von im Stoffgemisch eingesetzten Komponenten aber auch die Kinetik der Substrat-Verfügbarkeit von separat eingesetzten Komponenten stark fördern können.

Wie bereits zuvor erwähnt wurde, können die einzelnen Komponenten des erfindungsgemä-ßen Düngemittelsystems jeweils separat oder im Gemisch vorliegen, wobei die einzelnen Komponenten pulverförmig, als Granulat, Lösung oder Suspension vorliegen können. Umfasst sind auch granulatförmige Ausführungsformen, bei denen wenigstens zwei der Komponenten in den einzelnen Granulatkörnern im Gemisch vorliegen. Umfasst sind auch granulatförmige Ausführungsformen, bei denen die Granulatkörner aus wenigstens einer der Komponenten bestehen, wobei die Oberfläche der Granulatkörner mit wenigstens einer der anderen Komponenten überzogen ist.

Unabhängig davon, ob die einzelnen Komponenten separat oder im Gemisch vorliegen, können diese je nach konkreter Anwendung mit stark unterschiedlichen Anteilen zum Einsatz kommen. Steht die pH-absenkende Wirkung im Vordergrund, wird mit größeren Anteilen an Komponente A gearbeitet. Steht die Kationen-bindende Wirkung im Vordergrund, muss der Anteil an Komponente B größer sein.

Bezogen auf das Gesamtgewicht des erfindungsgemäßen Düngemittelsystems (100% = Summe der Komponenten A, B und optional C) beträgt der Anteil der Komponente A vorzugsweise wenigstens 1 Gew.-%. Bei Anwendungen mit größerem Bedarf an pH-absenkender Wirkung, beträgt der Anteil der Komponente A wenigstens 10 Gew.-%, wenigstens 50 Gew.-%, wenigstens 70 Gew.-% oder wenigstens 90 Gew.-%. Bei speziellen Ausführungsformen kann der Anteil der Komponente A bis zu 95 Gew.-%, bis zu 98 Gew.-%, bis zu 99 Gew.-% oder gar bis zu 99,9 Gew.-% betragen.

Bezogen auf das Gesamtgewicht des erfindungsgemäßen Düngemittelsystems beträgt der Anteil der Komponente B vorzugsweise wenigstens 0,1 Gew.-%. Bei Anwendungen mit grö-ßerem Bedarf an Kationen bindender Wirkung, beträgt der Anteil der Komponente B wenigstens 1 Gew.-%, wenigstens 2 Gew.-%, wenigstens 5 Gew.-% oder wenigstens 10 Gew.-%. Bei speziellen Ausführungsformen kann der Anteil der Komponente B bis zu 50 Gew.-%, bis zu 70 Gew.-%, bis zu 90 Gew.-%, bis zu 95 Gew.-%, bis zu 98 Gew.-% oder gar bis zu 99 Gew.-% betragen.

Besteht eine der Komponenten A, B und/oder C aus mehr als einer Substanz, ist mit den oben angegebenen Anteilen die Summe der jeweils unter die Komponente A, B und/oder C fallenden Substanzen gemeint.

Bei bestimmten Ausführungsformen liegen Komponente A und B und gegebenenfalls auch die optionale Komponente C in den Körnern eines granulatförmigen Düngemittelsystems im Gemisch vor.

Bei einer weiteren speziellen Ausführungsformen liegen die Komponente A und/oder die Komponente B und optional die Komponente C auf Tonmineralpartikel aufgezogen vor. Umfasst sind also auch Varianten, bei denen nur die Komponente A bzw. nur die Komponente B jeweils optional mit der Komponente C auf Tonmineralpartikel aufgezogen vorliegen sowie Varianten, bei denen sowohl die Komponente A als auch die Komponente B optional zusammen mit der Komponente C auf Tonmineralpartikel aufgezogen vorliegen.

Bei manchen Ausführungsformen sind die Komponenten gemeinsam auf dieselben Tonmineralpartikel aufgezogen. Bei anderen Ausführungsformen sind die Komponenten auf unterschiedliche Fraktionen der Tonmineralpartikel separat aufgezogen, sodass die Mischung erst durch Mischen der entsprechend beladenen Tonmineralpartikel erfolgt, falls es sich um ein Gemisch handelt. Bei bestimmten Ausführungsformen liegen unterschiedliche Fraktionen von Tonmineralpartikeln mit darauf aufgezogener Komponente A bzw. B und/oder C separat vor und werden auch in dieser Form auf die zu behandelnde Fläche aufgebracht.

Die bestimmungsgemäße Verwendung des erfindungsgemäßen Düngemittelsystems besteht darin, dass die Komponente A, die Komponente B und optional die Komponente C nacheinander, gleichzeitig, separat oder im Gemisch auf ein Pflanzensubstrat appliziert werden, um darin die Pflanzenverfügbarkeit der Nährstoffe zu verbessern.

Wie zuvor bereits erwähnt wurde, sind verschiedene Kombinationen von streufähigen Produkten applizierbar. Darüber hinaus ist auch die Applikation in flüssiger Form möglich, je nach Löseeigenschaften als Lösung oder Suspension oder als Kombination hiervon.

Bei besonderen Ausführungsformen liegt das Düngemittelsystem als Düngemittelgemisch vor und wird zur Saatgutbeize eingesetzt, sodass die Applikation dann in dieser Form erfolgt. Bei einer weiteren besonderen Ausführungsform wird das erfindungsgemäße Düngemittelsystem in Form eines Düngemittelgemisches als Güllezusatz verwendet und in dieser Form auf die zu behandelnde Fläche ausgebracht. Bei noch einer weiteren besonderen Ausführungsform der Erfindung wird das erfindungsgemäße Düngemittelsystem als Düngemittelgemisch auf andere konventionelle Düngemittel in Form eines Coatings aufgezogen und dann in dieser Form auf die zu behandelnde Fläche ausgebracht.

Die Komponenten A und/oder B können nacheinander, gleichzeitig separat oder im Gemisch im wurzelnahen Bereich appliziert werden, sei es durch loses Ausstreuen auf der Fläche oder durch Eindringen in die oberflächennahen Pflanzensubstratschichten.

Bei einer besonderen Ausführungsform der Erfindung wird das erfindungsgemäße Düngemittelsystem nicht nur zur Verbesserung der Pflanzenverfügbarkeit von im Pflanzensubstrat chemisch gebundenen Pflanzennährstoffen eingesetzt sondern gleichzeitig auch zur Abschreckung von Schadorganismen. Eine besonders bevorzugte Ausführungsform für diese Zwecke enthält als Komponente A elementaren Schwefel und als Komponente B eine organische Säure und optional als Komponente C ein Salz der Kohlensäure.

Im Zusammenhang mit der vorliegenden Erfindung wurde festgestellt, dass durch die Verwendung von elementarem Schwefel als Komponente A in Kombination mit organischen Säuren als Komponente B eine deutliche Verbesserung der Pflanzenverfügbarkeit des elementaren Schwefels erzielt werden kann. Manche Ausführungsformen des erfindungsgemäßen Düngemittelsystems, bei denen als Komponente A elementarer Schwefel verwendet wird, enthalten daher als Komponente B eine chelatbildende organische Säure, vorzugsweise eine der oben genannten organischen Säuren.

Es wird hierdurch eine deutlich homogenere Verteilung im Pflanzensubstrat möglich. Als Nebeneffekt wird somit eine äußerst effektive Schwefeldüngung erreicht, da der in dieser Form auf das Pflanzensubstrat applizierte Schwefel eine deutlich höhere Pflanzenverfügbarkeit aufweist, als herkömmliche Düngemittel auf Basis von elementarem Schwefel.

Bestimmte Ausführungsformen mit elementarem Schwefel als Komponente A, die in Form eines Schwefelgranulats verwendet werden, sind zur Verbesserung der Verfügbarkeit des Schwefels vorzugsweise mit Bentonit und/oder Harnstoff versetzt, wobei der in den Granulatkörnern enthaltene Anteil an Bentonit und/oder Harnstoff nach dem Ausbringen auf die zu behandelnde Fläche dazu beitragen kann, dass die Schwefelpartikel leichter zerfallen und so über eine vergrößerte Oberfläche ihre Wirkung besser entfalten können.

Bestimmte Ausführungsformen des erfindungsgemäßen Düngemittelsystems, bei denen als Komponente A elementarer Schwefel verwendet wird, enthalten zur Verbesserung der Verfügbarkeit des in Form von Schwefelgranulat verwendeten Schwefels, einen Anteil von wenigstens zwei Zusätzen, die ausgewählt sind unter Bentonit, Harnstoff und organische Säure.

Von der vorliegenden Erfindung umfasst ist auch ein Verfahren zur Herstellung des erfindungsgemäßen Düngemittelsystems, wobei dieses Verfahren folgende Stufen umfasst:
a) Bereitstellen der Komponente A in Form einer Schmelze, einer Lösung, einer Suspension, eines Pulvers oder eines Granulats,
b) Bereitstellen der Komponente B in Form einer Schmelze, einer Lösung, einer Suspension, eines Pulvers oder eines Granulats,
c) optional Bereitstellen der Komponente C in Form einer Schmelze, einer Lösung, einer Suspension, eines Pulvers oder eines Granulats,
d) Inkontaktbringen der Komponenten A und B und optional C, um ein Zwischenprodukt zu erhalten und
e) Erzeugung eines Gemisches in Form einer Suspension, einer Lösung, eines Granulats oder eines Pulvers aus dem in Stufe d) erhaltenen Zwischenprodukt.

Beispielsweise kann bei solchen Ausführungsformen, bei denen die Komponente A in Form von elementarem Schwefel vorliegt, eine Schwefelschmelze erzeugt werden, die mit einer organischen Säure oder deren Salz (Komponente B) vermischt wird (Zwischenprodukt), wobei man das Gemisch anschließend tropfenweise erkalten lässt.

Bei anderen Ausführungsformen wird die Komponente A in Form von elementarem Schwefelgranulat mit einer organischen Säure (Komponente B) in wässriger Lösung überzogen (Zwischenprodukt) und anschließend getrocknet und so in ein trockenes Granulat überführt.

Bei wieder anderen Ausführungsformen wird die Komponente B in Form von Zeolithpartikeln bereitgestellt, wobei diese Partikel mit einer wässrigen Lösung der Komponente A getränkt (Zwischenprodukt) und anschließend (ggf. unter Rühren) getrocknet und so in ein trockenes Pulver überführt werden.

Für Zwecke der ursprünglichen Offenbarung wird darauf hingewiesen, dass sämtliche Merkmale, wie sie sich aus der vorliegenden Beschreibung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass die nachfolgenden Ausführungsbeispiele lediglich als Beispiele für mögliche Ausführungsformen der vorliegenden Erfindung dienen. Der Fachmann wird daher ohne Weiteres verstehen, dass darüber hinaus auch alle anderen Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen innerhalb des Schutzumfangs der Ansprüche wird hier nur der Kürze und der Lesbarkeit der Beschreibung wegen verzichtet.

### Ausführungsbeispiele

### Beispiel 1 - Kombination Ammoniumsulfat/Oxalsäure

| | |
|---|---|
| Zusammensetzung: | 95 % Ammoniumsulfat |
| | 5 % Oxalsäure |
| Anwendung: | 50 kg/ha, einmalig im Frühjahr |
| Ergebnis: | Maiskultur mit normaler P-Düngung; Ertrag = rel. 100 % |
| | Maiskultur mit um 33 % verringerter P-Düngung und Gabe von 50 kg/ha des Produktes; Ertrag = rel. 104 % |

### Beispiel 2 - Kombination Schwefel/Oxalsäure

| | |
|---|---|
| Zusammensetzung: | 93 % Elementarer Schwefel |
| | 7 % Oxalsäure |
| Anwendung: | 35 kg/ha, einmalig im Frühjahr |
| Ergebnis: | Maiskultur mit normaler P-Düngung; Ertrag = rel. 100 % |
| | Maiskultur mit um 50 % verringerter P-Düngung und Gabe von 35 kg/ha des Produktes; Ertrag = rel. 107 % |

### Beispiel 3 - Kombination Schwefel/Ascorbinsäure/Capsaicin

| | |
|---|---|
| Zusammensetzung: | 87 % Elementarer Schwefel |
| | 10 % Ascorbinsäure |
| | 3 % Capsaicin |
| Anwendung: | 30 kg/ha, einmalig im Frühjahr |
| Ergebnis: | In diesem Versuch wurde beobachtet, dass der Schaden durch Wildschweine in einer Maiskultur um 65 % verringert wurde im Vergleich zu einer unbehandelten Kontrolle. |

### Beispiel 4 - Kombination Schwefel/Zitronensäure

| | |
|---|---|
| Zusammensetzung: | 86 % Elementarer Schwefel |
| | 14 % Zitronensäure |
| Anwendung: | 40 kg/ha, einmalig im Frühjahr |
| Ergebnis: | Maiskultur mit normaler P-Düngung; Ertrag = rel. 100 % |
| | Maiskultur mit um 50 % verringerter P-Düngung und Gabe von 40 kg/ha des Produktes; Ertrag = rel. 108 % |

## Patentansprüche

1. Düngemittelsystem zur Verbesserung der Pflanzenverfügbarkeit von in einem Pflanzensubstrat chemisch gebundenen Pflanzennährstoffen, **dadurch gekennzeichnet, dass** das Düngemittelsystem
- eine Komponente A zum Absenken des pH-Wertes im Pflanzensubstrat und
- eine Komponente B zum chemischen Binden von 2-wertigen Kationen und optional
- eine Komponente C mit Repellent-Effekt gegenüber Schadorganismen
umfasst.

2. Düngemittelsystem nach Anspruch 1, **dadurch gekennzeichnet, dass** die Komponente A aus elementarem Schwefel, einer Sulfatverbindung, säureproduzierenden Mikroorganismen, die Produktion saurer Wurzelexsudate fördernden Stoffen oder einer Kombination hiervon besteht.

3. Düngemittelsystem nach einem der Ansprüche 1 und 2, **dadurch gekennzeichnet, dass** die Komponente B aus einem Kationentauscher und/oder einem vorzugsweise ökologisch und/oder vorzugsweise toxikologisch unbedenklichen Chelatbildner besteht, der aus der Gruppe ausgewählt ist, die aus Aminosäuren, organischen Säuren, sowie deren Salzen und Estern, mehrwertigen Alkoholen, mehrwertigen Ethern, und Kombinationen hiervon besteht.

4. Düngemittelsystem nach einem der Ansprüche 1 bis 3, **dadurch gekennzeichnet, dass** die Komponente B einen Chelatbildner enthält, der aus der Gruppe ausgewählt ist, die aus Gluconsäure, Ascorbinsäure, Isoascorbinsäure, Polyasparaginsäure, Acrylsäure, Oxalsäure, Weinsäure, Zitronensäure und Kombinationen hiervon besteht.

5. Düngemittelsystem nach einem der Ansprüche 1 bis 4, **dadurch gekennzeichnet, dass** die Komponente B einen Kationentauscher enthält, der aus der Gruppe ausgewählt ist, die aus Zeolith, Montmorillonit und Kombinationen hiervon besteht.

6. Düngemittelsystem nach einem der Ansprüche 1 bis 5, **dadurch gekennzeichnet, dass** die Komponente C ausgewählt ist unter einem Farbstoff, einem Geruchsstoff, einem Geschmacksstoff, einem Knisterstoff oder Kombinationen hiervon.

7. Düngemittelsystem nach einem der Ansprüche 1 bis 6, **dadurch gekennzeichnet, dass** die Komponente A und/oder die Komponente B und optional die Komponente C jeweils separat oder im Gemisch als Pulver, Granulat, Lösung oder Suspension vorliegen.

8. Düngemittelsystem nach einem der Ansprüche 1 bis 7, **dadurch gekennzeichnet, dass** die Komponente A und/oder die Komponente B und optional die Komponente C auf Tonmineralpartikel aufgezogen vorliegen.

9. Verwendung des Düngemittelsystems nach einem der vorangegangenen Ansprüche zur Verbesserung der Pflanzenverfügbarkeit von in einem Pflanzensubstrat gebundenen Nährstoffen, **dadurch gekennzeichnet, dass** die Komponente A zum Absenken des pH-Wertes im Pflanzensubstrat und die Komponente B zum chemischen Binden von 2-wertigen Kationen und optional die Komponente C nacheinander, gleichzeitig, separat oder im Gemisch auf das Pflanzensubstrat appliziert werden.

10. Verwendung des Düngemittelsystems nach Anspruch 9, **dadurch gekennzeichnet, dass** die Komponente A und/oder die Komponente B nacheinander, gleichzeitig separat oder im Gemisch im wurzelnahen Bereich appliziert werden.

11. Verwendung des Düngemittelsystems nach einem der vorangegangenen Ansprüche zur Abschreckung von Schadorganismen, **dadurch gekennzeichnet, dass** das Düngemittelsystem als Komponente A elementaren Schwefel und als Komponente B eine organische Säure und optional als Komponente C Salz der Kohlensäure umfasst.

12. Verfahren zur Herstellung eines Düngemittelsystems nach einem der Ansprüche 1 bis 9, **dadurch gekennzeichnet, dass** es die folgenden Stufen umfasst:
a) Bereitstellen der Komponente A in Form einer Schmelze, einer Lösung, einer Suspension, eines Pulvers oder eines Granulats,
b) Bereitstellen der Komponente B in Form einer Schmelze, einer Lösung, einer Suspension, eines Pulvers oder eines Granulats,
c) optional Bereitstellen der Komponente C in Form einer Schmelze, einer Lösung, einer Suspension, eines Pulvers oder eines Granulats,
d) Inkontaktbringen der Komponenten A und B und optional C, um ein Zwischenprodukt zu erhalten und
e) Erzeugung eines Gemisches in Form einer Suspension, einer Lösung, eines Granulats oder eines Pulvers aus dem in Stufe d) erhaltenen Zwischenprodukt.
